Europäisches Patentamt

European Patent Office

Office européen des brevets

(11) Numéro de publication: **0 247 937 B1**

# (12) FASCICULE DE BREVET EUROPEEN

(45) Date de publication de fascicule du brevet:
21.08.91

(51) Int. Cl.⁵: **G21C 19/20**

(21) Numéro de dépôt: 87401172.9

(22) Date de dépôt: 25.05.87

(54) **Installation de manutention des assemblages constituant le coeur d'un réacteur nucléaire à neutrons rapides.**

(30) Priorité: 29.05.86 FR 8607712

(43) Date de publication de la demande:
02.12.87 Bulletin 87/49

(45) Mention de la délivrance du brevet:
21.08.91 Bulletin 91/34

(84) Etats contractants désignés:
**BE DE GB IT**

(56) Documents cités:
**FR-A- 2 188 251**
**FR-A- 2 267 614**
**GB-A- 2 005 901**

**JOURNAL OF THE BRITISH NUCLEAR ENER-
GY SOCIETY, vol. 25, no. 2, avril 1986, pages
85-92, Londres, GB; J.P. CRETTE et al.: "From
superphénix 1 to superphénix 2"**

(73) Titulaire: **COMMISSARIAT A L'ENERGIE ATO-
MIQUE Etablissement de Caractère Scientifique Technique et Industriel
31/33, rue de la Fédération
F-75015 Paris(FR)**

Titulaire: **ELECTRICITE DE FRANCE Service
National
2, rue Louis Murat
F-75008 Paris(FR)**

(72) Inventeur: **Jacquelin, Roland
Montée des Adrechs
F-04100 Manosque(FR)**
Inventeur: **Venobre, Henri
Chemin des Adrechs
F-83560 Vinon Sur Verdon(FR)**
Inventeur: **Limouzin, Dominique
74, rue Cuvier
F-69006 Lyon(FR)**
Inventeur: **Martin, Eric
8 Avenue Salvador Allende
F-69100 Villeurbanne(FR)**

(74) Mandataire: **Mongrédien, André et al
c/o BREVATOME 25, rue de Ponthieu
F-75008 Paris(FR)**

Rank Xerox (UK) Business Services

## Description

L'invention concerne une installation pour la manutention des assemblages constituant le coeur d'un réacteur nucléaire à neutrons rapides, entre la cuve principale du réacteur dans laquelle est situé le coeur et une cuve annexe placée à côté de cette cuve principale et pouvant servir éventuellement à un stockage intermédiaire des assemblages.

Une telle installation a pour double fonction d'assurer l'évacuation des assemblages usés hors de la cuve principale du réacteur et d'assurer l'introduction à l'intérieur de cette cuve des assemblages neufs.

Les assemblages concernés par cette manutention sont tous les assemblages constituant le coeur du réacteur, tels que les assemblages combustibles, les assemblages de la protection neutronique latérale et les assemblages absorbants.

Comme l'illustre le document FR.A.2 267 614, dans le réacteur français Super Phénix, l'installation de manutention des assemblages comprend une hotte de transfert placée au-dessus de la dalle surplombant à la fois la cuve principale et la cuve annexe, de façon à être à cheval sur les bords adjacents de ces deux cuves. Deux rampes inclinées traversent la dalle de façon à faire communiquer respectivement la hotte de transfert avec un poste primaire situé à l'intérieur de la cuve principale et avec un poste secondaire situé à l'intérieur de la cuve annexe. La hotte de transfert ainsi que les rampes sont équipées de rails de guidage le long desquels se déplacent deux pots assurant chacun le transport d'un assemblage. Les pots sont accrochés à des moyens de levage comprenant des chaînes entraînées chacune par un treuil situé à la partie supérieure de la hotte.

L'installation de manutention des assemblages du réacteur Super Phénix fonctionne de façon symétrique, l'un des pots étant utilisé pour évacuer un assemblage usé alors que l'autre pot est utilisé pour introduire dans la cuve principale du réacteur un assemblage neuf. Lorsque les deux pots ont été remontés à l'intérieur de la hotte de transfert, celle-ci effectue une rotation de 180° autour de son axe vertical, afin que chacun des pots puisse redescendre par la rampe opposée à celle par laquelle il a été introduit dans la hotte.

Dans l'installation de manutention du réacteur Super Phénix, la hotte de transfert est généralement appelée "sas de transfert". Cette appellation s'explique par le fait que des vannes à tiroir sont placées entre la hotte et chacune des rampes, ce qui permet de faire fonctionner la hotte comme un sas ou une écluse lors de la manutention des assemblages. Lorsque le réacteur est en fonctionnement, ces vannes à tiroir sont fermées afin d'assurer le confinement de la cuve du réacteur vis-à-vis de l'extérieur.

En pratique, le fonctionnement en sas de la hotte de transfert n'est pas utilisé. En effet, le confinement de l'intérieur de la cuve principale du réacteur vis-à-vis de la cuve annexe lors de la manutention des assemblages est réalisé par un siphon de métal liquide qui se trouve dans la partie inférieure de la rampe descendant dans la cuve annexe. Les vannes à tiroir ont donc seulement pour fonction d'assurer le confinement de la cuve principale du réacteur lors du fonctionnement de celui-ci.

La présence de ces vannes à tiroir entre les rampes et la hotte de transfert conduit à interrompre les rails de guidage des pots sur une longueur qui est grande devant le diamètre des roues par lesquelles les pots roulent sur les rails.

Une première conséquence de cette discontinuité introduite par les vannes à tiroir est qu'il est nécessaire d'équiper les pots de roues supplémentaires afin d'assurer la continuité du guidage des pots lors du passage de cette discontinuité. En plus de l'augmentation du coût qui en résulte, ces roues supplémentaires rendent le guidage du pot hyperstatique. Par conséquent, il existe des risques de coincement du pot en cas de déformation ou de déviation angulaire des rampes.

De plus, les discontinuités introduites par les vannes à tiroir doivent être franchies à petite vitesse. La cadence de manutention est donc sérieusement pénalisée par la présence de ces discontinuités.

La présente invention a précisément pour objet une installation de manutention des assemblages du coeur d'un réacteur nucléaire à neutrons rapides ne présentant pas les inconvénients qui viennent d'être mentionnés et permettant notamment de supprimer tout risque de coincement des pots grâce à l'utilisation d'un système de guidage isostatique, tout en permettant un accroissement important de la cadence de manutention, et cela malgré une simplification de l'installation permettant d'en réduire le coût de façon sensible.

A cet effet, il est proposé une installation de manutention des assemblages constituant le coeur d'un réacteur nucléaire à neutrons rapides, entre un poste primaire situé dans une cuve principale contenant le coeur et un poste secondaire situé dans une cuve annexe, cette installation comprenant au moins une hotte de transfert pivotante, des moyens pour faire pivoter cette hotte autour d'un axe vertical, deux rampes inclinées aptes à relier respectivement la hotte au poste primaire et au poste secondaire, au moins un pot de transport d'un assemblage, des moyens de levage du pot le long de moyens de guidage internes à chacune des rampes et à la hotte pivotante, entre le poste primaire et le poste secondaire, et des moyens pour obturer les rampes à leurs extrémités supérieures lorsque le réacteur est en fonctionnement, caractérisée en ce que les moyens pour obturer les rampes comprennent deux clapets portés par une plate-forme tournante supportant également la hotte de transfert, ces clapets étant situés en des emplacement tels qu'ils puissent être placés simultanément au-dessus des extrémités supérieures des rampes à l'aide des moyens pour faire pivoter la hotte, lorsque le réacteur est en fonctionnement, et en ce que le pot coopère avec les moyens de guidage de façon isostatique.

Grâce à ces caractéristiques, lorsque le réacteur est en fonctionnement les extrémités supérieures des rampes sont obturées par les clapets, de sorte que le confinement est préservé. Lors de la manutention, les clapets sont effacés dans la plateforme tournante et la hotte supportée par cette plateforme est amenée successivement en vis-à-vis de chacune des rampes sous l'effet d'une rotation de cette plate-forme. Ainsi, il n'existe pratiquement plus de discontinuités entre les rails de guidage formés dans les rampes et à l'intérieur de la hotte. Les roues supplémentaires indispensables selon la technique antérieure sont donc supprimées. Par conséquent, le guidage du pot le long des rails devient isostatique et tout risque de coincement disparait, même dans le cas où un léger décalage angulaire existerait entre les rails de guidage de la hotte et les rails de guidage d'une rampe. De plus, le déplacement du pot de transport des assemblages peut se faire à grande vitesse sur la majeure partie du trajet. La cadence de manutention se trouve ainsi sérieusement augmentée, même dans le cas où l'installation ne comprend qu'un seul pot. A titre d'illustration, la durée d'un cycle de manutention, qui est dans le réacteur Super Phénix d'environ 45 mn, est ramené à environ 11 mn grâce à l'installation de manutention selon l'invention.

De préférence, afin de diminuer la quantité de matière et, par conséquent, le coût de l'installation, la hotte de transfert comprend un tube épais incliné selon un angle identique à celui des rampes, de façon à pouvoir être placé dans le prolongement de chacune de ces rampes lors de la mise en oeuvre des moyens pour faire pivoter la hotte. Ce tube épais assure à la fois l'étanchéité du confinement et la fonction de protection biologique. Son positionnement au plus près de la source chaude que constitue le pot de transport lorsqu'il se trouve dans la hotte permet de réduire sensiblement le volume et donc le poids de la protection biologique.

Le tube épais constituant la protection biologique n'étant pas calorifugé intérieurement, il constitue une capacité calorifique qui assure également la régulation thermique, le transfert thermique s'effectuant par conduction dans l'épaisseur du tube. Ainsi, le tube épais réchauffe le pot lorsque celui-ci contient un assemblage à faible puissance, alors qu'il assure le refroidissement d'un pot bloqué dans la hotte et dégageant une puissance élevée. Il est ainsi possible de limiter la température dans la hotte sans recourir à des moyens actifs tels qu'une ventilation forcée.

Afin de permettre un remplacement rapide d'un clapet dans le cas où les joints qu'il supporte sont usagés, la plate-forme tournante peut également porter un clapet de rechange logé sous un bouchon démontable traversant cette plate-forme, un poste de reprise des clapets constitué par un évidement formé sur une plaque de base fixe située sous la plate-forme permettant de permuter l'un des clapets d'obturation des rampes avec ce clapet de rechange.

Dans ce cas, le clapet de rechange et la hotte sont situés de préférence en deux emplacements tels que le clapet de rechange est en face de l'une des rampes lorsque la hotte est en face de l'autre rampe.

Selon un mode de réalisation préféré de l'invention, un obturateur apte à être fixé à l'extrémité inférieure de la hotte est logé dans un évidement formé sur la plaque de base (cet évidement correspondant de préférence au poste de reprise des clapets) et la hotte est montée de façon démontable sur la plate-forme tournante. Grâce à cette caractéristique, il est possible d'utiliser une hotte unique pour effectuer la manutention des combustibles sur un site comprenant plusieurs réacteurs à neutrons rapides. De plus, cette caractéristique facilite les opérations d'entretien de la hotte et du pot qui peuvent être effectuées dans un atelier séparé du réacteur proprement dit.

Afin que les dilatations différentielles qui peuvent se produire sur les rampes n'entraînent pas de discontinuité dans le guidage du pot, les rampes sont fixées de préférence à la plaque de base par des rotules et peuvent se déplacer librement vers le bas.

Dans l'installation de manutention du réacteur Super Phénix, les moyens de levage des pots comprennent une chaîne unique pour chacun de ces pots. Pour tenir compte du risque de rupture d'un maillon de ces chaînes, les pots sont équipés de systèmes parachutes.

Selon un aspect intéressant de l'invention, conduisant ici encore à une simplification de l'installation et, par conséquent, à une réduction de son coût, la chaîne unique est remplacée par deux câbles actionnés simultanément par un ensemble moteur et des moyens de détection d'un éventuel déséquilibre entre les efforts exercés par l'intermédiaire de chacun des câbles sont prévus. De cette manière, toute défaillance de l'un des câbles est immédiatement détectée et la fiabilité du système est fortement accrue. On peut donc supprimer le système parachute, ce qui a pour double avantage de réduire le coût et de supprimer une autre cause possible de coincement du pot. La chaîne cinématique ainsi obtenue présente en outre une sûreté accrue, puisque sa conception autorise le déplacement de la charge, même après rupture de l'un des deux câbles.

On décrira maintenant, à titre d'exemple non limitatif, un mode de réalisation préféré de l'invention en se référant aux dessins annexés dans lesquels :

- la figure 1 est une vue en coupe verticale représentant de façon schématique l'ensemble de l'installation réalisée conformément à l'invention ;
- la figure 2 est une vue en coupe schématique comparable à la figure 1 représentant à plus grande échelle la plate-forme tournante supportant la hotte de transfert et la plaque de base fixe supportant cette plate-forme tournante et à laquelle sont suspendues les rampes ;
- les figures 3a et 3b illustrent de façon très schématique, en vue de dessus, les dispositions relatives des rampes et du poste de reprise des clapets sur la plaque de base et les dispositions relatives de la hotte et des clapets sur la plate-forme tournante respectivement ;
- la figure 4 est une vue très schématique, en coupe verticale, illustrant la mise en place d'un obturateur sur la hotte, avant le démontage de celle-ci ;
- la figure 5 est une vue en coupe longitudinale schématique représentant à plus grande échelle l'un des clapets et son mécanisme de commande ;
- la figure 6 est une vue en coupe verticale schématique illustrant le supportage de la plaque de base par la dalle surplombant la cuve principale du réacteur et par le puits de cuve entourant cette cuve ;
- la figure 7 est une vue en coupe à plus grande échelle de la partie A sur la figure 1 correspondant à l'accrochage de l'extrémité supérieure de la rampe servant au transport des assemblages entre la cuve principale du réacteur et la hotte de transfert ;
- la figure 8 est une vue en coupe à plus grande échelle de la partie B sur la figure 1 correspondant à l'accrochage de l'extrémité supérieure de la rampe débouchant dans la cuve annexe ;
- la figure 9 est une vue en coupe schématique illustrant en partie les moyens de levage servant à déplacer le pot à l'intérieur des rampes et de la hotte au moyen de deux câbles parallèles ; et
- la figure 9a est une section selon la ligne C-C de la figure 9.

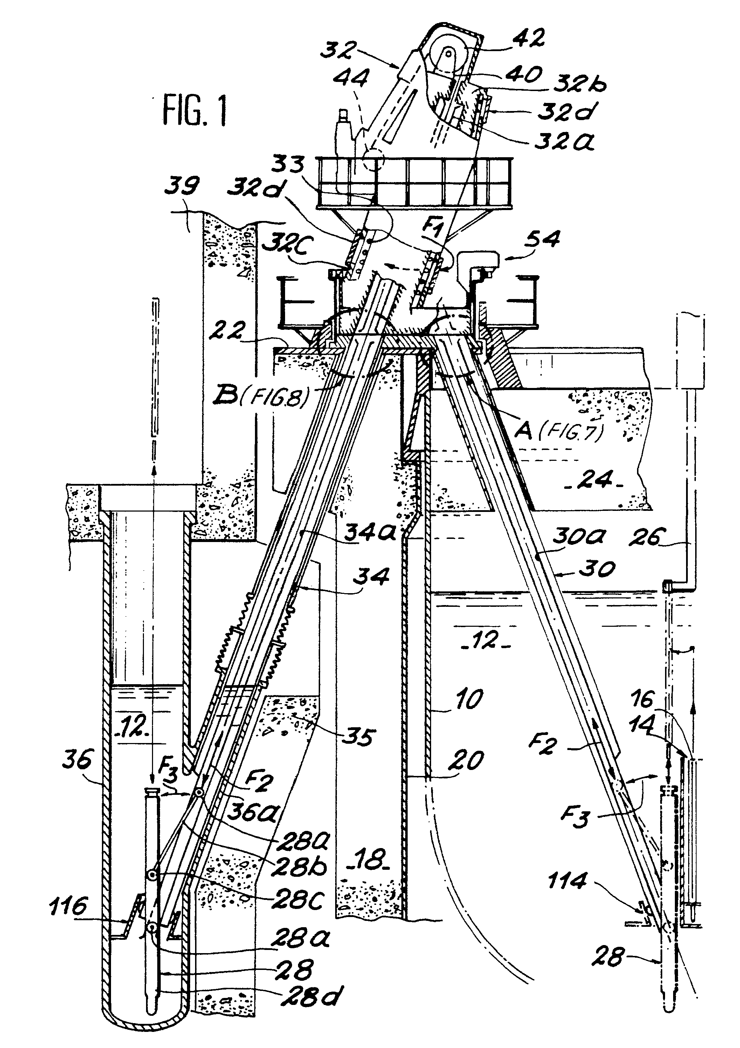

Sur la partie droite de la figure 1, on a représenté une partie de la cuve principale 10 d'un réacteur nucléaire à neutrons rapides. De façon bien connue, cette cuve 10 est remplie de sodium 12 et contient le coeur 14 du réacteur, dont seule une petite partie apparaît sur la figure. Ce coeur est constitué d'un grand nombre d'assemblages fissiles et fertiles dont l'un est représenté en 16.

Dans les réacteurs de type intégré, la cuve principale 10 contient également tous les composants du circuit primaire, et notamment les pompes et les échangeurs de chaleur. Dans les réacteurs du type à boucle, une partie au moins de ces composants est située à l'extérieur de la cuve 10.

La cuve principale 10 du réacteur est logée dans un puits de cuve constitué par un bâtiment de béton dont une partie est représentée en 18 sur la figure 1. Une peau métallique 20 doublant intérieurement le puits de cuve 18 constitue une cuve de sécurité. La cuve principale 10 est suspendue par son extrémité supérieure à un plancher horizontal 22 recouvrant le bord périphérique du puits de cuve.

La cuve principale 10 est obturée à son extrémité supérieure par une dalle de fermeture caissonnée 24 portant en son centre, généralement par l'intermédiaire d'un système de deux bouchons tournants imbriqués (non représentés), un appareil de manutention des assemblages 16, tel qu'un ringard 26.

Le ringard 26 permet d'introduire un assemblage 16 dans un pot de manutention ou de transport 28 constituant l'un des éléments de l'installation de manutention selon l'invention. A cet effet, l'assemblage 16 peut être soit prélevé directement dans le coeur 14 du réacteur, soit dans une zone de stockage (non représentée) prévue à l'intérieur de la cuve principale 10 du réacteur. Bien entendu, le ringard 26 permet d'effectuer la manutention inverse consistant à prélever un assemblage neuf du pot 28, pour l'introduire dans le coeur 14.

En plus du pot 28, l'installation de manutention selon l'invention comprend une rampe primaire 30, une rampe secondaire 34 et une hotte de transfert 32.

Les rampes 30 et 34 sont inclinées, en sens opposé d'un angle d'environ 20° par rapport à la verticale. De façon plus précise, leurs axes sont situés dans un même plan et forment un V renversé.

La rampe primaire 30 traverse la dalle 24 pour déboucher à son extrémité inférieure à l'intérieur de la cuve 10, dans une zone voisine du coeur 14 généralement appelée poste de chargement-déchargement du réacteur, et que l'on appellera pour simplifier poste primaire.

La rampe secondaire 34 traverse l'extrémité supérieure du puits de cuve 18, puis la paroi 35 d'un bâtiment adjacent à ce dernier, pour pénétrer par une tubulure 36a dans une cuve annexe 36. Les cuves 10 et 36 sont situées approximativement au même niveau, et à côté l'une de l'autre.

En variante, la paroi 35 et la paroi du puits de cuve 18 pourraient être constituées par une paroi unique.

Le diamètre de la cuve annexe 36 est différent selon que les assemblages parvenant dans cette cuve ont ou non subi au préalable un stockage à l'intérieur même de la cuve du réacteur.

Dans le mode de réalisation représenté sur la figure 1, on suppose qu'un stockage des assemblages a eu lieu dans la cuve primaire. Le diamètre de la cuve 36 est donc faible, puisque les assemblages peuvent être évacués directement. A cet effet, un système de manutention (non représenté) peut être placé dans une cellule 39 située au-dessus de la cuve 36.

Comme la cuve principale 10 du réacteur, la cuve annexe 36 est remplie de sodium liquide 12, de même que la partie inférieure de la rampe secondaire 34 située dans la tubulure 36a. On appelle généralement poste de chargement-déchargement secondaire la zone définie par l'extrémité inférieure de la cuve 36 dans laquelle débouche la rampe secondaire 34. Pour simplifier, on appellera cette zone poste secondaire dans la suite du texte.

La hotte de transfert 32 repose sur la dalle 24 et sur le plancher 22 et elle est montée de façon à pouvoir pivoter autour d'un axe vertical (flèche F1), d'une manière qui sera décrite plus en détail ultérieurement. Il est à noter que l'axe de rotation de la hotte 32 est confondu avec l'axe de symétrie des rampes 30 et 34.

La hotte 32 est constituée pour l'essentiel par un tube cylindrique épais 32b dont l'axe géométrique est incliné selon un angle identique à l'angle d'inclinaison de la rampe primaire 30 et de la rampe secondaire 34. Par une rotation de 180° de la hotte 32, on peut ainsi amener l'extrémité inférieure ouverte de celle-ci successivement dans le prolongement de l'extrémité supérieure ouverte de la rampe primaire 30 et dans le prolongement de l'extrémité supérieure ouverte de la rampe secondaire 34. La hotte 32 est fermée à son extrémité supérieure et son diamètre intérieur est approximativement le même que celui des rampes 30 et 34.

Grâce à cette configuration, la protection biologique est placée le plus près possible de l'assemblage en cours de transfert. L'épaisseur de la protection étant imposée, on en réduit ainsi la masse et, par conséquent, le coût.

En outre, la simplicité de forme de cette protection biologique permet de la rendre étanche. Elle assure ainsi le confinement du gaz de couverture contenu au-dessus du sodium 12, en période de manutention pendant le fonctionnement en puissance du réacteur.

Le tube épais 32b est doublé extérieurement par un calorifuge 32c autorisant une circulation ascendante d'air ou de gaz par convexion naturelle dans un espace annulaire délimité entre ce calorifuge 32c et la paroi du tube 32b. A cet effet, des fenêtres d'entrée et de sortie, dont l'ouverture est contrôlée par des obturateurs 32d, sont formées respectivement en bas et en haut du calorifuge 32c. La circulation de l'air par convexion naturelle de l'air permet d'évacuer la puissance résiduelle des assemblages fissiles lors de leur déchargement.

De plus, l'inertie thermique des parois épaisses du tube 32b permet de disposer de plusieurs heures pour intervenir en cas d'incident.

La hotte 32 constitue ainsi une protection biologique "chaude" assurant par conduction la régulation thermique du pot qu'elle contient, sans qu'il soit nécessaire d'avoir recours à une ventilation forcée.

Afin d'éviter le figeage du métal liquide contenu dans le pot en période de manutention, un système de chauffage 33 est disposé autour du tube épais 32b, et en contact avec celui-ci.

L'installation de manutention selon l'invention comprend un pot unique 28 qui se déplace depuis le poste secondaire jusqu'au poste primaire, et inversement, en passant successivement par la rampe secondaire 34, par la hotte tournante 32 et par la rampe primaire 30 (flèches F2 sur la figure 1). A cet effet, le pot 28 est accroché à des moyens de levage qui seront décrits plus en détail ultérieurement. On indiquera simplement ici que ces moyens de levage comprennent deux câbles 40 dont les extrémités inférieures sont accrochées au pot 28 ou, plus précisément, à l'extrémité supérieure d'une biellette 28b dont l'extrémité inférieure est articulée en 28c sur le corps 28d du pot, sensiblement à mi-hauteur de ce corps.

Afin d'assurer son guidage lorsqu'il se déplace à l'intérieur des rampes 30 et 34 et de la hotte 32, le pot 28 est équipé de deux paires de roues 28a qui sont guidées par des rails 30a, 32a et 34a situés respectivement dans la rampe 30, dans la hotte 32 et dans la rampe 34. L'une des paires de roues 28a est montée à l'extrémité supérieure de la biellette 28b, alors que l'autre paire de roues est montée sur le corps 28d, en-dessous de l'articulation 28c.

Comme l'illustre la figure 1, grâce à la structure du pot 28 qui vient d'être décrite et à l'accrochage de ce pot aux câbles 40 par l'extrémité supérieure de la biellette 28b, le pot s'incline pour suivre les rails placés à l'intérieur des rampes et de la hotte et se redresse en position verticale lorsqu'il parvient au poste primaire ou au poste secondaire de chargement et de déchargement (flèche F3).

La limitation du nombre de roues 28a à deux paires conduit à obtenir un guidage isostatique du pot 28 à l'intérieur des rampes et de la hotte. Tout risque de blocage du pot lors de son déplacement est ainsi évité, même dans le cas où un décalage angulaire existerait entre la hotte et l'une ou l'autre des rampes.

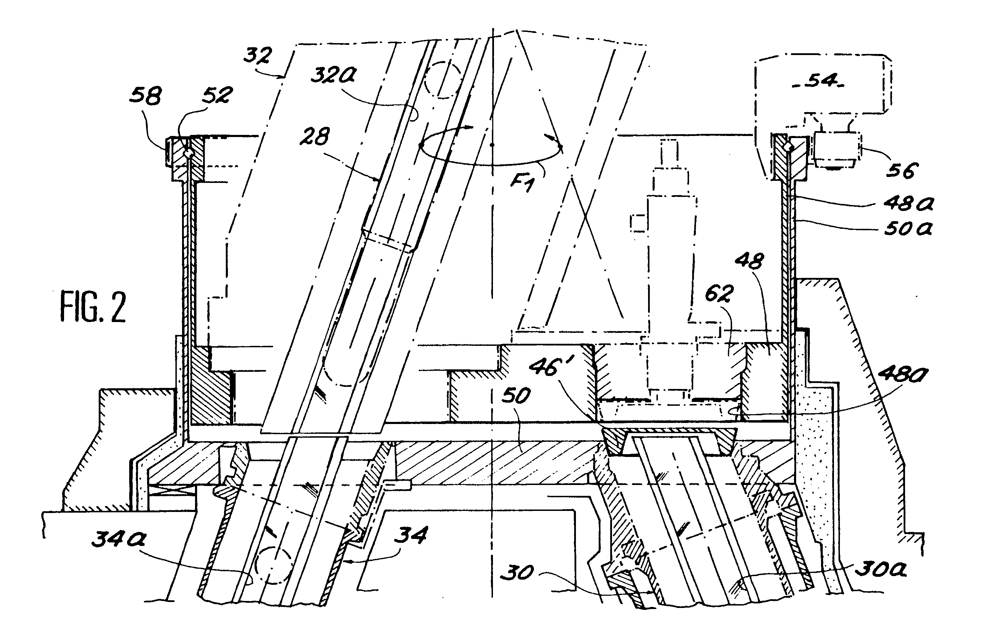

En se référant à la figure 2, on voit que le caractère isostatique du guidage du pot est rendu possible par le fait qu'il n'existe pratiquement pas de discontinuité entre les rails 32a de la hotte et les rails 30a ou 34a de la rampe avec laquelle la hotte est alignée. De ce fait, il n'est plus nécessaire de munir le pot de paires de roues de guidage supplémentaires comme c'était le cas dans l'installation de manutention du réacteur Super Phénix.

Selon l'invention, ce résultat est rendu possible en supprimant le fonctionnement en sas de la hotte de transfert lors de la manutention. Il est à noter que cette suppression est parfaitement possible puisque le sodium 12 contenu dans la partie inférieure de la rampe secondaire 34 située dans la tubulure 36a (figure 1) assure alors le confinement de l'atmosphère interne à la cuve principale 10 du réacteur vis-à-vis de l'extérieur.

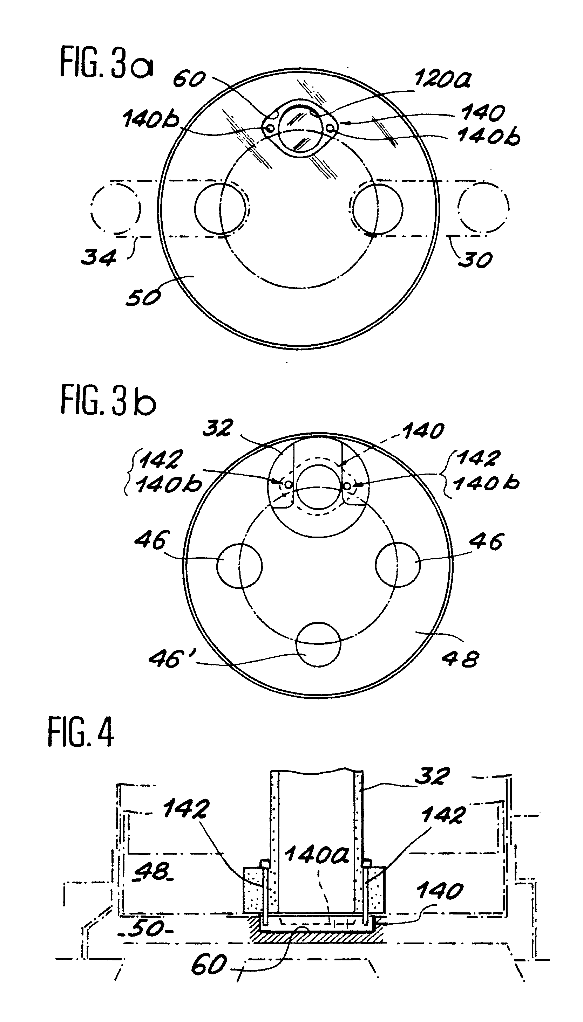

Ainsi, conformément à l'invention, les extrémités supérieures ouvertes des rampes primaire 30 et secondaire 34 sont obturées seulement lors du fonctionnement en puissance du réacteur. Cette obturation est obtenue au moyen de deux clapets 46 (figure 3b) montés sur une plate-forme horizontale tournante 48 sur laquelle est également fixée (de préférence de façon démontable) la hotte 32. La plate-forme 48 présente la forme d'un disque dont l'axe géométrique est confondu avec l'axe de rotation vertical de cette plate-forme. Les clapets 46 sont disposés de façon symétrique par rapport à l'axe de rotation vertical de la hotte 32 et de la plate-forme 48, par exemple à 90° de part et d'autre de la hotte.

Chacun des clapets 46 est constitué par un disque plein, d'axe vertical, portant deux joints d'étanchéité toriques à sa périphérie.

La plate-forme 48 est disposée immédiatement au-dessus d'une plaque de base fixe 50 qui en assure le supportage et l'entraînement en rotation. Comme l'illustre la figure 3a, cette plaque 50 est une plaque horizontale en forme de disque, de diamètre légèrement supérieur à celui de la plate-forme 48, et dont l'axe géométrique est confondu avec l'axe de rotation de cette dernière. Les extrémités supérieures des rampes 30 et 34 débouchent sur cette plaque en des emplacements diamétralement opposés.

De façon plus précise, les rails 30a et 34a des rampes 30 et 34 font saillie vers le haut au delà de la face supérieure de la plaque 50 et les rails 32a de la hotte 32 font saillie vers le bas au delà de la face inférieure de la plate-forme 48, de telle sorte qu'un jeu très faible (quelques millimètres) existe entre les extrémités des rails lorsque la hotte est placée au-dessus de l'une des rampes (figure 2). Un espace plus important est formé entre la plaque 50 et la plate-forme 48, afin que la rotation de cette dernière soit possible lorsqu'un clapet obture l'une des rampes.

Ainsi, à la fin d'une période de manutention et avant la montée en puissance du réacteur, une rotation de 90° de la plaque 48 a pour effet d'amener les clapets 46 diamétralement opposés en vis-à-vis des extrémités supérieures des rampes 30 et 34.

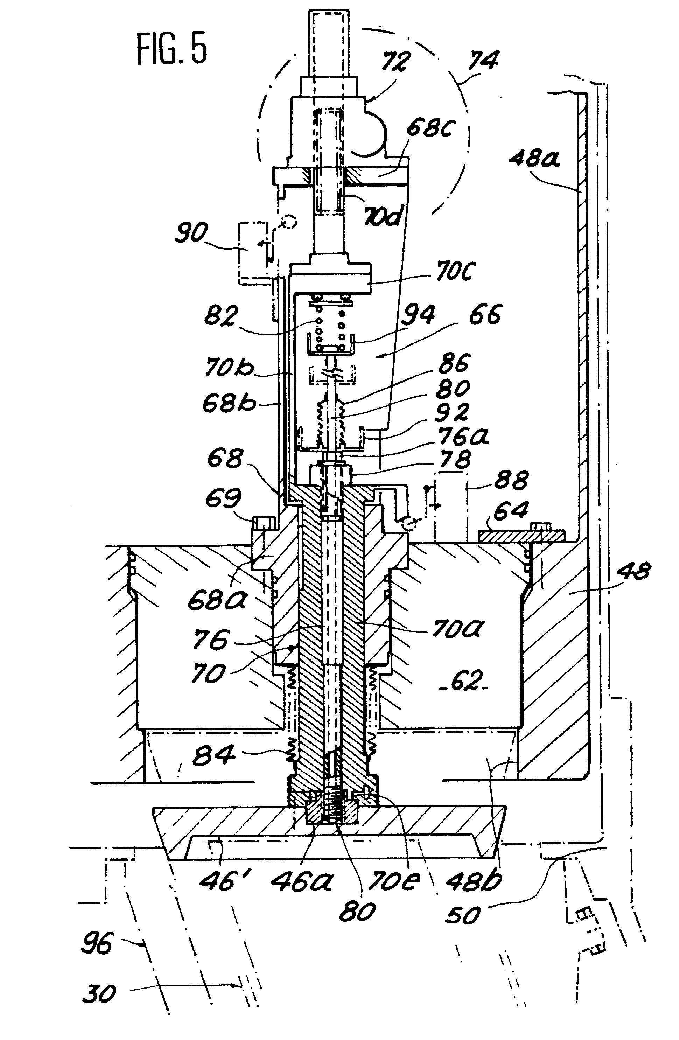

Le mécanisme de commande des clapets 46 sera décrit ultérieurement plus en détail en se référant à la figure 5. On observera simplement ici que les clapets 46 occupent lors de la manutention une position haute dans laquelle ils sont escamotés dans des évidements 48b (figures 2 et 5) formés à l'intérieur de la plate-forme tournante 48, afin de ne pas entraver la rotation de celle-ci. Au contraire, lorsque le réacteur est en fonctionnement, ces clapets sont descendus afin de venir obturer de façon étanche les extrémités supérieures des rampes. Dans cette position, les clapets 46 sont entièrement dégagés des évidements 48b, de sorte que la rotation de la plate-forme 48 est également possible.

En plus des deux clapets 46 situés en des emplacements diamétralement opposés sur la plate-forme 48, l'installation selon l'invention comprend avantageusement un autre clapet 46' constituant un clapet de rechange. Ce troisième clapet 46' est monté sur la plate-forme 48 en un emplacement diamétralement opposé à celui occupé par la hotte 32 (figure 3b). Ainsi, lorsque la hotte 32 se trouve située dans le prolongement de l'une ou l'autre des rampes primaire 30 et secondaire 34, le clapet de rechange 46' est situé en face de l'extrémité supérieure de l'autre rampe.

Le clapet de rechange 46' est identique aux deux autres clapets. De même, le mécanisme de commande du clapet de rechange est identique au mécanisme de commande de chacun des deux autres clapets 46.

La présence de ce clapet de rechange 46' sur la plate-forme tournante 48 a pour avantage de permettre un remplacement très rapide de l'un quelconque des deux autres clapets 46, par exemple lorsque les joints d'étanchéité de ces clapets sont endommagés.

Pour permettre ce remplacement, la plaque de base 50 comprend, en un emplacement angulairement décalé par exemple de 90° par rapport aux extrémités supérieures des rampes, un évidement 60 s'ouvrant sur la face supérieure de cette plaque 50 (figures 3a et 4). Cet évidement 60 constitue un poste de reprise des clapets grâce auquel l'un des deux clapets "actifs" 46 peut être remplacé par le clapet de rechange 46'.

Ce remplacement peut s'effectuer très simplement de la façon suivante.

Dans un premier temps, le clapet de rechange 46' et la hotte 32 étant en face des rampes 30 et 34, l'opérateur actionne le mécanisme de commande du clapet 46 à remplacer, situé au-dessus de l'évidement 60, pour l'introduire dans cet évidement et le déconnecter de son mécanisme de commande. Par une rotation d'un demi tour de la plate-forme 48, le second clapet 46 est amené à son tour au-dessus de l'évidement 60. Le clapet de rechange 46' se trouve alors en face de l'extrémité supérieure de l'une des rampes 30 ou 34. L'opérateur descend ce clapet à l'intérieur de la plaque de base 50 et le déconnecte de son mécanisme de commande, pour obturer l'extrémité de la rampe correspondante. Par une rotation en sens inverse d'un quart de tour de la plate-forme 48, le second clapet 46 est amené au-dessus de l'autre rampe, puis introduit dans la plaque de base par actionnement de son mécanisme de commande.

L'installation se trouve alors en état de fonctionner, le clapet 46 usagé ayant été remplacé par le clapet de rechange 46'.

Ces opérations de remplacement du clapet 46 sont réalisées de telle sort que la hotte 32 ne se trouve jamais en face d'une rampe obturée par un clapet. Ainsi, la coupure des rails 30a, 32a et 34a est réduite au minimum compatible avec les tolérances mécaniques de construction. En pratique, elle est de quelques millimètres. De plus, ces opérations sont effectuées sans rupture de l'étanchéité vis-à-vis de l'extérieur.

Afin de permettre l'évacuation du clapet 46 usagé, puis l'introduction d'un nouveau clapet de rechange 46' à la place de ce clapet usagé, le mécanisme de commande du clapet de rechange 46' est monté dans la plate-forme tournante 48 par l'intermédiaire d'un bouchon démontable 62, comme l'illustre notamment la figure 5.

Le montage et le démontage du bouchon 62 sont effectués par exemple en dévissant trois pattes 64 vissées sur la face supérieure horizontale de la plate-forme tournante 48 et venant en appui sur la face supérieure du bouchon 62. Afin de préserver le confinement de l'espace formé entre la plate-forme tournante 48 et la plaque de base 50, deux joints d'étanchéité sont montés à la périphérie du bouchon 62 et un système de circulation d'argon est prévu entre ces joints. Il est à noter qu'un système analogue est utilisé pour tous les joints assurant le confinement.

En se référant aux figures 3a, 3b et 4, on voit qu'un obturateur de hotte 140 peut aussi être logé dans l'évidement 60 formé dans la plaque de base 50. L'obturateur 140 comporte alors sur sa face supérieure un évidement circulaire 140a dont les dimensions permettent d'y loger le clapet de rechange 46' ou l'un des clapets 46. L'obturateur 140 comporte en outre deux oreilles diamétralement opposées, dans lesquelles sont formées des trous taraudés 140b.

Lorsqu'on désire obturer l'extrémité inférieure de la hotte 32, les clapets 46 et 46' sont escamotés dans la plate-forme tournante 48 grâce à l'actionnement des moyens de commande qui leur sont associés. Par une rotation de la plate-forme tournante 48, l'opérateur amène l'extrémité inférieure de la hotte 32 au-dessus de l'évidement 60 dans lequel est logé l'obturateur de hotte 140. Des vis 142 logés à demeure dans la paroi de la hotte 32 sont alors vissées dans les trous taraudés 140b. L'obturateur de hotte est alors fixé sur la hotte 32 pour en obturer de façon étanche l'extrémité inférieure ouverte. La hotte 32 ainsi obturée peut ensuite être démontée de la plate-forme tournante sur laquelle elle est fixée par exemple par des vis ou des goujons (non représentés).

Cette caractéristique peut être utilisée notamment pour effectuer une intervention sur le pot de transport 28, alors remonté dans la hotte 32. Elle permet aussi d'assurer la manutention du combustible sur plusieurs réacteurs situés sur un même site à l'aide d'une seule hotte 32.

On décrira maintenant en se référant à la figure 2 les moyens assurant le supportage et l'entraînement en rotation de la plate-forme tournante 48 à partir de la plaque de base 50. Ces fonctions sont reportées vers le haut, grâce à des viroles coaxiales 48a et 50a prolongeant respectivement vers le haut les bords périphériques de la plate-forme 48 et de la plaque 50, afin d'éviter que la chaleur régnant au niveau de la plaque 50 ne perturbe l'étanchéité des joints tournants.

Le supportage de la plate-forme 48 est réalisé grâce à un roulement 52 à trois jeux de galets, placé entre les extrémités supérieures des brides 48a et 50a.

L'entraînement en rotation de la plate-forme 48 est réalisé grâce à un groupe motoréducteur 54 supporté par l'extrémité supérieure de la virole 48a. L'arbre de sortie du groupe motoréducteur 54 porte un pignon 56 qui est engréné sur une couronne dentée 58 formée sur la face externe de la virole 50a, à son extrémité supérieure.

Le groupe moto-réducteur 54 autorise de préférence une vitesse de rotation rapide et une vitesse lente, cette dernière étant utilisée en fin de déplacement.

Afin de préserver le confinement de l'espace délimité entre la plate-forme tournante 48 et la plaque de base 50, des joints d'étanchéité tournants (non représentés) sont associés au roulement 52. De plus, une circulation d'argon est prévue entre ces joints afin de permettre la détection immédiate d'une fuite de l'un d'entre eux.

Sur la figure 5, on a représenté à plus grande échelle le mécanisme 66 permettant de commander le déplacement du clapet de rechange 46' entre sa position basse d'obturation représentée en traits pleins et sa position haute d'escamotage à l'intérieur d'un évidement 48b formé dans la plate-forme 48 en-dessous du bouchon 62 (cette position étant représentée en traits mixtes). Ce mécanisme permet en outre de commander la préhension du clapet et de contrôler la présence de celui-ci.

Comme on l'a mentionné précédemment, les mécanismes de commande associés à chacun des clapets 46 sont identiques au mécanisme de commande 66 associé au clapet de rechange 46a. La description qui va maintenant être faite de ce mécanisme 66 s'applique donc également aux mécanismes servant à commander les deux clapets 46, avec pour seule différence le fait que ces derniers mécanismes sont implantés directement dans la plate-forme 48, et non dans un bouchon 62.

Le mécanisme de commande 66 comprend une pièce de supportage 68 dont la partie inférieure 68a présentant la forme d'un fourreau est fixée de façon étanche, par exemple par des vis 69, dans un alésage traversant en son centre le bouchon 62. La pièce 68 se prolonge vers le haut au-delà de la face supérieure plane de la plate-forme 48, sous la forme d'une partie verticale 68b présentant une section horizontale en forme de U. A son extrémité supérieure, la partie 68b de la pièce 68 se termine par une plaque horizontale 68c.

La pièce 68 supporte une pièce 70 mobile verticalement selon l'axe vertical commun au bouchon 62 et au clapet 46'. La partie inférieure 70a de cette pièce 70 a la forme d'un manchon cylindrique reçu de façon coulissante dans la partie inférieure en forme de fourreau 68a de la pièce 68. La pièce 70 se prolonge au-dessus de la face supérieure de la plate-forme tournante 48 par une partie verticale 70b présentant une section en forme de U et située à l'intérieur de la partie 68b de la pièce 68. A son extrémité supérieure, la partie 70b se termine par une plaque horizontale 70c située en-dessous de la plaque 68c.

Une tige filetée 70d fait saillie verticalement vers le haut selon l'axe du bouchon 62 et du clapet 46a, en traversant librement la plaque 68c. Cette dernière supporte un vérin à vis sans fin 72, dont l'actionnement est commandé manuellement, par exemple au moyen d'un volant schématisé en 74 sur la figure 4. En agissant sur le vérin 72 à l'aide du volant 74, on commande à volonté la montée ou la descente de la pièce 70 à l'intérieur de la pièce 68.

Le clapet de rechange 46' (ou l'un des clapets 46) est solidarisé de l'extrémité inférieure de la pièce 70 par une tige verticale creuse 76 traversant la partie inférieure 70a de cette pièce 70. A son extrémité inférieure, la tige 76 est munie d'un filetage et fait saillie au-delà de l'extrémité inférieure de la partie 70a, de façon à pouvoir être vissée dans un écrou 46a porté par le clapet 46 en son centre et sur sa face supérieure.

A son extrémité supérieure faisant saillie au-dessus de la partie 70a de la pièce 70, la tige 76 est munie d'une tête hexagonale 76a permettant de visser ou de dévisser la tige de l'écrou 46a à l'aide d'une clef appropriée. La partie de la tige 76 adjacente à la tête 76a est également filetée afin de recevoir un contre-écrou 78 apte à prendre appui sur la face supérieure de la partie 70a, pour immobiliser la tige 76 dans la pièce 70 lorsque la tige est vissée dans l'écrou 46a. Dans cette position, un nez 70e en forme de collerette formé à l'extrémité inférieure de la partie 70a de la pièce 70 est emboîté dans le clapet 46, autour de l'écrou 46a.

La tige creuse 76 comporte un alésage central dans lequel se déplace librement une tige centrale 80 constituant un doigt de contrôle de la présence du clapet 46. Un ressort de compression 82 interposé entre l'extrémité supérieure du doigt 80 et la plaque 70c de la pièce 70 exerce en permanence sur le doigt 80 une poussée vers le bas.

Un soufflet d'étanchéité 84 est interposé entre l'extrémité inférieure de la pièce 68 et l'extrémité inférieure de la pièce 70. De même, un soufflet d'étanchéité 86 est interposé entre l'extrémité supérieure de la tige creuse 76 et l'extrémité supérieure du doigt 80. En outre, deux joints d'étanchéité annulaires sont prévus entre la partie 68a de la pièce 68 et le bouchon 62 avec une circulation intermédiaire d'argon entre ces joints.

Des contacteurs 88 et 90 sont montés respectivement sur le bouchon 62 et sur la partie 68b de la pièce 68 afin de détecter la position basse et la position haute de la pièce 70. A ces deux positions de la pièce 70 correspondent respectivement l'obturation de la rampe correspondante par le clapet 46 ou l'escamotage de ce clapet à l'intérieur de la plate-forme tournante 48.

Dans le mode de réalisation représenté sur la figure 5, le contrôle de la préhension du clapet 46 par la tige creuse 76 et de la présence du clapet en face de cette tige sont effectués de façon visuelle.

A cet effet, l'extrémité supérieure de la tige creuse 76 est surmontée d'un tambour 92 portant un repère visuel. De même, l'extrémité supérieure de la tige 80 est surmontée d'un tambour 94 portant un repère visuel. Les tambours 92 et 94 sont placés à l'intérieur de la partie 70b de la pièce 70. Des repères correspondants formés sur la pièce fixe 68 permettent de contrôler la préhension du clapet 46 ainsi que la présence de celui-ci.

Ainsi, lorsque la tige creuse 76 est vissée dans l'écrou 46a, le repère formé sur le tambour 92 est normalement en vis-à-vis d'un premier repère de la pièce 68. Lorsque la tige 76 est complètement dévissée de l'écrou 46a, le repère du tambour 92 est en vis-à-vis d'un second repère de la pièce fixe. En agissant sur le volant 74, on déplace alors la pièce 70 vers le haut pour dégager le nez 70e formé à l'extrémité inférieure de cette pièce du clapet 46'. Lorsque cette opération est terminée, le repère du tambour 92 est en face d'un troisième repère formé sur la pièce fixe 68.

Parallèlement, lorsque le nez 70 de la pièce 70 est emboîté dans le clapet 46', le repère formé sur le tambour 94 reste en permanence en vis-à-vis d'un repère correspondant formé sur la pièce fixe 68. En effet, l'extrémité inférieure du doigt 80 est alors en appui sur le clapet 46.

Au contraire, lorsque la tige 76 est dévissée de l'écrou 46a et que la pièce 70 s'éloigne du clapet 46', le doigt 80 descend sous l'action du ressort de compression 82. Le repère formé sur le tambour 94 se déplace alors vers le bas par rapport au repère correspondant formé sur la pièce fixe 68. On peut ainsi contrôler visuellement que la pièce 70 est bien séparée du clapet 46.

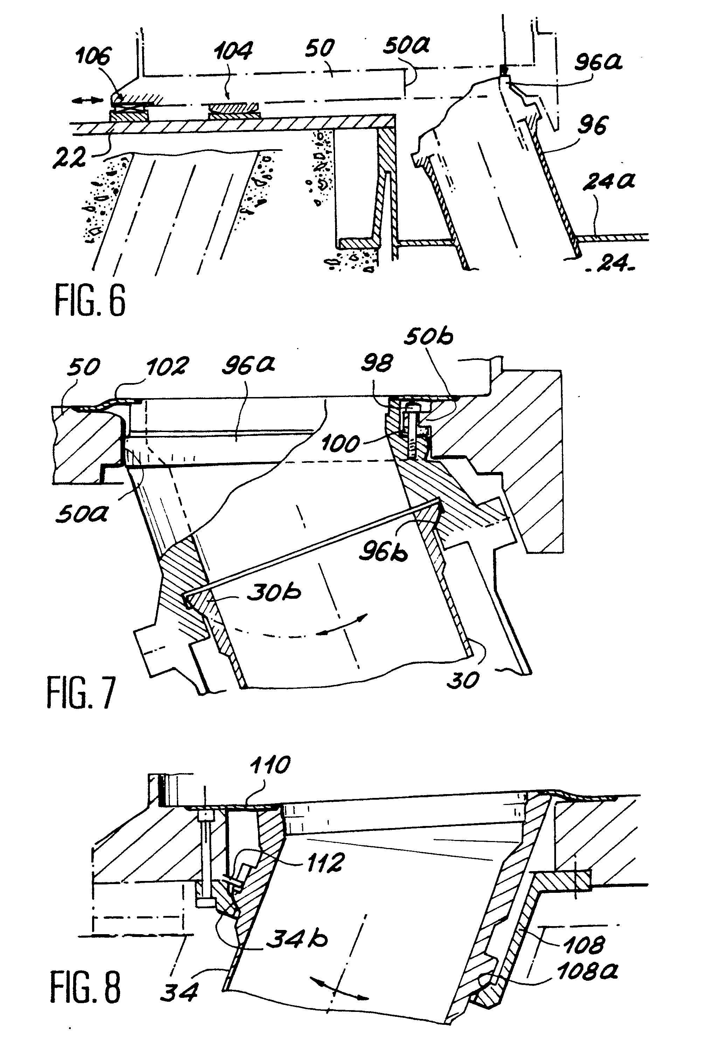

Sur la figure 6, on a représenté schématiquement le principe de supportage de la plaque de base 50 par la dalle 24 obturant la cuve du réacteur et par le plancher 22 situé sur la paroi périphérique du puits de cuve.

Une virole 96 entoure la rampe primaire 30 dans la partie de celle-ci qui traverse la dalle 24 et qui est située au-dessus de cette dernière. La virole 96 est soudée sur la semelle supérieure 24a de la dalle 24. Cette virole 96 comporte à son extrémité supérieure une portée sphérique 96a qui vient se loger dans un passage cylindrique 50a de la plaque 50, comme l'illustrent les figures 6 et 7.

La plaque de base 50 repose sur l'extrémité supérieure de la virole 96 par un épaulement 50b situé dans le passage 50a au-dessus de la partie cylindrique de celui-ci dans laquelle est reçue la portée sphérique 96a. Afin de ne pas bloquer la liaison rotulante formée par la coopération de la surface 96a avec l'alésage 50a, la plaque 50 est fixée sur l'extrémité de la virole 96 seulement dans la partie de l'épaulement 50b la plus éloignée de l'axe vertical de la plaque de base 50. Cette fixation est obtenue au moyen de goujons 98, ou analogues, une cale d'appui 100 étant interposée entre l'épaulement 50b et la virole 96.

L'étanchéité entre la plaque de base 50 et l'extrémité supérieure de la virole 96 est réalisée au moyen d'une membrane élastique 102 (figure 7) en forme de rondelle, dont les périphéries extérieure et intérieure sont soudées respectivement sur la face supérieure de la plaque 50 et sur l'extrémité de la virole 96.

Afin qu'une éventuelle dilatation différentielle entre la plaque de base 50, la semelle supérieure 24a de la dalle et le plancher 22 soit sans incidence sur la tenue mécanique de ces pièces, la liaison rotulante qui vient d'être décrite entre la virole 96 portée par la dalle et la plaque de base 50 est complétée par deux patins 104 disposés à environ 120° par rapport à cette liaison rotulante. Les patins 104 sont des patins de glissement formés sur la face inférieure de la plaque de base 50 et reposant sur le plancher 22.

Afin d'éviter une rotation horizontale de la plaque 50 autour de la liaison rotulante 96a-50a, un système de guidage à clavette 106 est prévu en un emplacement diamétralement opposé par rapport à cette liaison rotulante. Ce système de guidage 106 est orienté radialement par rapport à l'axe vertical de la plaque 50 et situé entre la face inférieure de cette dernière et la face supérieure du plancher 22.

On a vu précédemment que l'un des avantages essentiels de l'invention réside dans le faible jeu existant entre les rails de guidage 30a et 34a formés à l'intérieur des rampes et les rails de guidage 32a formés dans la hotte 32. Afin que cet espacement reste sensiblement constant à toute température, les rampes 30 et 34 sont suspendues à la plaque de base 50 d'une manière qui va maintenant être décrite plus en détail en se référant aux figures 7 et 8.

Comme l'illustre la figure 7, le supportage de la rampe primaire 30 est obtenu au moyen d'une portée sphérique 30b prenant appui de façon rotulante sur une portée conique 96b formée à l'intérieur de la virole 96, à proximité de la plaque de base 50.

De façon comparable (figure 8), la rampe secondaire 34 comporte à proximité de son extrémité supérieure une portée sphérique 34b qui prend appui de façon rotulante sur une portée tronconique 108a formée sur une pièce 108 fixée sur la face inférieure de la plaque de base 50.

L'étanchéité entre l'extrémité supérieure de la rampe 34 et la plaque de base 50 est obtenue au moyen d'une membrane élastique 110 en forme de rondelle, dont les bords périphériques extérieur et intérieur sont soudés respectivement sur la face supérieure de la plaque 50 et sur l'extrémité supérieure de la rampe secondaire 34.

Bien entendu, des moyens sont prévus en association avec les liaisons rotulantes qui viennent d'être décrites en se référant aux figures 7 et 8, afin d'empêcher la rotation des rampes par rapport aux pièces qui les supportent. Comme l'illustre la figure 8 pour la rampe 34, ces moyens peuvent notamment être constitués par un doigt 112 solidaire dans ce cas de la pièce 108 et pénétrant dans un logement approprié formé sur la rampe 34.

Pour compléter le supportage effectué par ces liaisons rotulantes sans entraîner de contrainte mécanique dans les rampes primaire et secondaire, les extrémités inférieures de celles-ci sont guidées par des pièces de guidage 114 et 116 (figure 1) fixés aux structures internes de la cuve principale 10 et de la cuve annexe 36, respectivement.

On a vu précédemment que les moyens de levage du pot 28 comprennent deux câbles 40. On voit sur la figure 1 que ces câbles passent sur deux poulies de renvoi 42, d'axe horizontal commun, situées au-dessus de la hotte 32, avant de s'enrouler sur deux tambours 44, présentant également un axe horizontal commun.

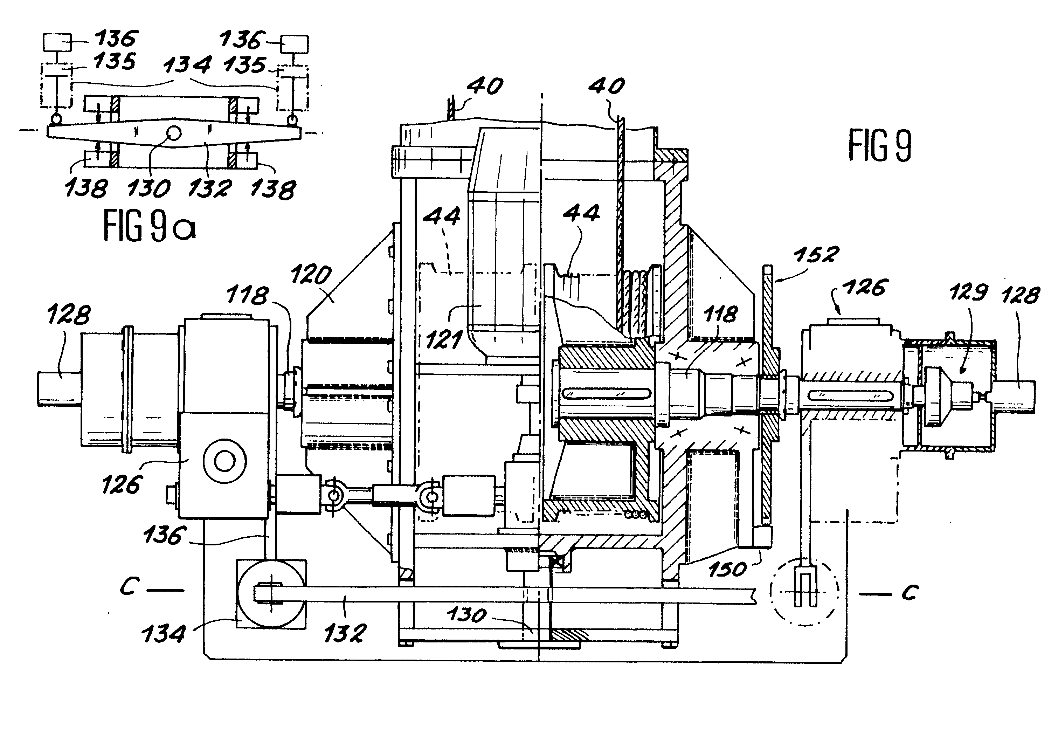

Sur les figures 9 et 9a, on a représenté le système de motorisation permettant d'entraîner simultanément les deux tambours 44 sur lesquels s'enroulent les câbles de levage 40 (ce système étant représenté en coupe sur la moitié droite de la figure 9). On voit clairement sur la figure 9 que ce système de motorisation est symétrique par rapport au plan vertical contenant l'axe de la hotte 32.

Ainsi, les tambours 44 sont disposés de part et d'autre de ce plan de symétrie sur deux arbres d'entraînement coaxiaux 118 supportés séparément de façon tournante par un même boîtier 120 fixé à l'extérieur de la hotte 32. Les arbres 118 font saillie à l'extérieur du boîtier 120, où chacun d'entre eux est entraîné en rotation par un groupe réducteur irréversible 126 dont le boîtier n'est pas relié au boîtier 120. L'entrée de chacun des groupes réducteurs 126 est elle-même reliée à l'arbre de sortie d'un ensemble moteur asynchrone unique 121, par l'intermédiaire d'un renvoi d'angle 122 et de deux mécanismes à joints de cardan 124.

De façon plus précise, l'axe géométrique commun à l'ensemble moteur 121 à son arbre de sortie et au renvoi d'angle 122 est placé dans le plan de symétrie du système de motorisation, les mécanismes 124 étant orientés normalement selon une direction perpendiculaire à ce plan et situés de part et d'autre de celui-ci.

L'ensemble moteur 121 permet de préférence de commander le déplacement du pot à vitesse rapide et à vitesse lente, cette dernière vitesse étant seulement utilisée en fin de déplacement du pot, soit à son arrivée dans la hotte, soit à son arrivée aux postes primaire et secondaire de chargement et de déchargement. A cet effet, l'ensemble 121 comprend alors deux moteurs asynchrones à frein incorporé, dont l'arbre de sortie commun comprend en outre un limiteur de couple.

De préférence, un codeur optique 128 est placé en bout de chacun des arbres 118, si nécessaire derrière un réducteur 129, afin de connaître à tout instant la position du pot dans l'installation.

Un verrou 150 est monté sur le boîtier 120, en face d'une couronne dentée 152 entraînée en rotation par l'un des arbres 118, afin de bloquer le tambour 44 si une intervention sur le réducteur 126 correspondant est nécessaire. Bien que cela ne soit pas représenté sur la figure 9, une disposition analogue se retrouve sur l'autre arbre 118.

Le système de motorisation qui vient d'être décrit comprend deux chaînes cinématiques parfaitement symétriques par rapport au plan vertical de symétrie défini précédemment. Dans ce système, grâce au montage flottant des boîtiers des groupes réducteurs 126 et à la présence des mécanismes à joints de cardan 124, un déséquilibre intervenant entre les couples exercés sur chacun des arbres 118 a pour effet un pivotement en sens inverse des boîtiers des groupes réducteurs autour de ces arbres. En détectant ce pivotement, on peut donc détecter immédiatement un tel déséquilibre et, par conséquent, une amorce de rupture de l'un des câbles 40.

A cet effet, le boîtier 120 supporte également l'axe 130 d'un levier ou balancier de détection de déséquilibre 132. l'axe 130 est confondu avec l'axe de l'ensemble moteur 121 et le levier 132 s'étend de façon symétrique de part et d'autre de cet axe 130. A chacune de ses extrémités, le levier 132 est accroché à l'extrémité d'un amortisseur 134 dont l'axe est orienté selon une direction qui est à la fois orthogonale aux axes géométriques du moteur 121 et de chacun des arbres 128.

Chacun des amortisseurs 134 comprend une cellule de pesée 135 (figure 9a) et est articulé par son extrémité opposée sur un levier 136 solidarisé du boîtier de chacun des groupes réducteurs 126 et orienté radialement par rapport à l'arbre 128 correspondant.

Lorsque les couples exercés sur les arbres 128 sont égaux, les leviers 136 sont parfaitement symétriques par rapport au plan de symétrie du système. Au contraire, si un déséquilibre apparaît entre les couples exercés sur chacun des arbres 128, par exemple en raison de l'amorce de rupture de l'un des câbles 40, les boîtiers des réducteurs 126 tendent à tourner en sens inverse autour de l'axe commun aux deux axes 128. Cette rotation relative est transmise au levier 132 par l'intermédiaire des amortisseurs 134. Elle est immédiatement détectée par des contacts électriques 138 (figure 9a) montés sur le boîtier 120 et sensibles à un décalage du levier 132 par rapport à sa position d'équilibre.

Il est à noter que le levier 132 permet également l'enroulement incorrect de l'un des câbles 40 sur le tambour 44 correspondant. De ce point de vue, la structure des tambours 44 et du boîtier 120 est telle que les câbles ne peuvent en aucun cas s'échapper des tambours.

Avantageusement, des hublots peuvent être prévus, notamment dans le boîtier 120, afin de permettre un contrôle visuel de l'état des câbles 40. De plus, le boîtier 120 (qui contient également les poulies de renvoi 42), ainsi que la hotte 32, sont chauffés aux environs de 150°C afin d'éviter le frettage par refroidissement des câbles sur les tambours.

De préférence, l'installation est également conçue de telle sorte que la partie des câbles 40 mouillée par le sodium 12 n'est jamais enroulée sur les tambours 44.

Enfin, une commande manuelle (non représentée) permet dans tous les cas de ramener l'équipage mobile dans une position sûre.

Grâce à toutes ces caractéristiques du système de levage du pot, la sécurité est telle que le parachute qui équipe le pot dans les installations existantes n'est plus nécessaire. La suppression de ce parachute permet de supprimer une autre cause possible de coincement du pot dans les rampes. De plus, elle conduit à une réduction appréciable du coût de l'installation.

En conclusion, l'installation selon l'invention conduit à un progrès notable par rapport aux installations existantes. En premier lieu, elle supprime pratiquement tout risque de coincement du pot, ainsi que les difficultés qui en découlent. En second lieu, elle réduit la masse, l'encombrement et surtout le coût de l'installation (notamment de la hotte) dans des proportions très importantes. Enfin, elle permet globalement de doubler la cadence de manutention, malgré la simplification du système (pot unique).

Bien entendu, l'installation décrite peut subir différentes modifications sans sortir du cadre de l'invention. Ainsi, et à titre d'exemple seulement, l'implantation des clapets et de la hotte sur la plate-forme tournante peut être différente de celle qui est représentée sur la figure 3a. En particulier, si l'axe vertical de pivotement de la plate-forme est décalé par rapport au plan vertical contenant les axes des rampes, les clapets ne seront pas situés en des emplacements diamétralement opposés de cette plate-forme.

Les rampes peuvent également être situées dans deux plans parallèles, de façon à être desservies par deux pots associés à deux hottes identiques à la hotte 32 décrite, mais décalées sur la plate-forme 48, par rapport à l'axe vertical de pivotement de cette dernière. Cette disposition permet d'améliorer sensiblement la cadence de manutention.

## Revendications

1. Installation de manutention des assemblages (16) constituant le coeur (14) du réacteur nucléaire à neutrons rapides, entre un poste primaire situé dans une cuve principale (10) contenant le coeur et un poste secondaire situé dans une cuve annexe (36), cette installation comprenant au moins une hotte de transfert pivotante (32), des moyens (54) pour faire pivoter cette hotte autour d'un axe vertical, deux rampes inclinées (30, 34) aptes à relier respectivement la hotte au poste primaire et au poste secondaire, au moins un pot de transport (28) d'un assemblage, des moyens de levage (40, 121) du pot le long de moyens de guidage (30a, 34a, 32a) internes à chacune des rampes et à la hotte pivotante, entre le poste primaire et le poste secondaire, et des moyens pour obturer les rampes à leurs extrémités supérieures lorsque le réacteur est en fonctionnement, caractérisée en ce que les moyens pour obturer les rampes comprennent deux clapets (46) portés par une plate-forme tournante (48) supportant également la hotte de transfert (32), ces clapets étant situés en des emplacements tels qu'ils puissent être placés simultanément au-dessus des extrémités supérieures des rampes (30, 34) à l'aide des moyens (54) pour faire pivoter la hotte, lorsque le réacteur est en fonctionnement, et en ce que le pot (28) coopère avec les moyens de guidage (30a, 34a, 32a) de façon isostatique.

2. Installation selon la revendication 1, caractérisée en ce que la hotte de transfert (32) comprend un tube épais (32b) incliné selon un angle identique à celui des rampes (30, 34), de façon à pouvoir être placé dans le prolongement de chacune de ces rampes, lors de la mise en oeuvre des moyens (54) pour faire pivoter la hotte.

3. Installation selon la revendication 2, caractérisée en ce que le tube épais (32b) est doublé extérieurement par un calorifuge (32c) délimitant avec le tube un espace annulaire de circulation d'un fluide de refroidissement, des ouvertures délimitées par des fenêtres formées en haut et en bas du calorifuge étant contrôlées par des obturateurs (32d).

4. Installation selon la revendication 3, caractérisée en ce que des moyens de chauffage (33) sont disposés autour du tube épais (32b), en contact avec ce tube.

5. Installation selon l'une quelconque des revendications 1 à 4, caractérisée en ce que la plate-forme tournante (48) porte également un clapet de rechange (46') logé sous un bouchon démontable (62) traversant cette plate-forme, un poste de reprise des clapets constitué par un évidement (60) formé sur une plaque de base (50) fixe située sous la plate-forme permettant de permuter l'un des clapets (46) d'obturation des rampes avec ce clapet de rechange (46').

6. Installation selon la revendication 5, caractérisée en ce que le clapet de rechange (46') et la hotte (32) sont situés en deux emplacements tels qu'ils puissent être placés simultanément au-dessus des extrémités supérieures des rampes (30, 34) à l'aide des moyens (54) pour faire pivoter la hotte, lorsque le réacteur est à l'arrêt.

7. Installation selon l'une quelconque des revendications 5 et 6, caractérisée en ce qu'un obturateur (140) apte à être fixé sur une extrémité inférieure ouverte de la hotte (32) est logé dans un évidement (60) formé sur la plaque de base (50), la hotte étant montée de façon démontable sur la plate-forme tournante (48).

8. Installation selon la revendication 7, caractérisé en ce que l'obturateur (140) est logé dans l'évidement (60) du poste de reprise des clapets.

9. Installation selon l'une quelconque des revendications 5 à 8, caractérisée en ce que les rampes (30, 34) reposent sur la plaque de base (50) par des liaisons rotulantes (30b, 34b) et peuvent se dilater librement vers le bas.

10. Installation selon l'une quelconque des revendications 5 à 9, caractérisée en ce que la plaque de base (50) repose par une liaison rotulante (50a, 96a) sur une virole (96) solidaire d'une dalle (24) obturant la cuve principale (10), cette virole (96) entourant la rampe primaire (30), la plaque de base (50) reposant de plus sur un plancher (22) dans lequel débouche la rampe secondaire (34) par des appuis glissants (104).

11. Installation selon l'une quelconque des revendications précédentes, caractérisée en ce que les moyens de levage du pot comprennent deux câbles (40) enroulés à une extrémité sur deux tambours (44) actionnés simultanément par un ensemble moteur commun (121) et dont l'extrémité opposée est accrochée au pot de transport (28), et des moyens (132, 138) sont prévus pour détecter un éventuel déséquilibre entre les efforts exercés sur chacun des câbles.

12. Installation selon l'une quelconque des revendications précédentes, caractérisée en ce que les moyens de guidage internes à chacune des rampes et à la hotte pivotante sont des rails (30a, 34a, 32a), les extrémités des rails (32a) de la hotte et des rails (30a, 32a) des rampes étant séparées par un jeu limité lorsque ces rails sont alignés.

13. Installation selon l'une quelconque des revendications précédentes, caractérisée en ce que chacun des clapets (46, 46') est monté sur la plate-forme tournante (48) par l'intermédiaire d'un mécanisme de commande (66) permettant un déplacement du clapet entre une position haute dans laquelle ce clapet est escamoté dans un évidement (48b) de la plate-forme tournante (48) et une position basse dans laquelle le clapet obture l'extrémité de l'une des rampes (30, 34), le mécanisme de commande (66) comprenant de plus des moyens (76) pour assurer la préhension du clapet (46, 46').

**Claims**

1. Installation for handling the assemblies (16) forming the core (14) of a fast neutron nuclear reactor between a first station situated in a main vessel (10) containing the core and a secondary station situated in an adjoining vessel (36), such installation comprising at least one pivotable transfer hood (32), means (54) for pivoting the hood around a vertical axis, two inclined ramps (30, 34) adapted to connect the hood to the primary station and the secondary station respectively, at least one pot (28) for transporting an assembly, means (40, 121) for lifting the pot along guide means (30a, 34a, 32a) inside each of the ramps and the pivotable hood between the primary station and the secondary station, and means for closing the ramps at their top ends when the reactor is operating, characterized in that the means for closing the ramps comprise two flaps (46) borne by a rotary platform (48) also supporting the transfer hood (32), such flaps being disposed in locations such that they can be simultaneously placed above the top ends of the ramps (30, 34) via the means (54) for pivoting the hood when the reactor is operating, the pot (28) cooperating with the guiding means (30a, 34a, 32a) isostatically.

2. Installation according to claim 1, characterized in that the transfer hood (32) comprises a thick tube (32b) inclined at an angle identical to that of the ramps (30, 34), so that it can be placed in the prolongation of each of such ramps when the means (54) for pivoting the hood are operated.

3. Installation according to claim 2, characterized in that the thick tube (32b) is lined externally with a heat insulation (32c) cooperating with the tube to bound an annular space for the circulation of a cooling fluid, openings bounded by windows formed at the top and bottom of the heat insulation being controlled by closure members (32d).

4. Installation according to claim 3, characterized in that heating means (33) are disposed around the thick tube (32b) in contact therewith.

5. Installation according to any one of the claims 1 to 4, characterized in that the rotary platform (48) also bears a spare flap (46') disposed beneath a demountable plug (62) extending through the platform, a flap-receiving station formed by a recess (60) formed on a fixed base plate (50) disposed below the platform enabling one of the ramp-closing flaps (46) to be interchanged with the spare flap (46').

6. Installation according to claim 5, characterized in that the spare flap (46') and the hood (32) are disposed in two locations such that they can be placed simultaneously above the top ends of the ramps (30, 34) by the agency of the means (54) for pivoting the hood when the reactor is shut down.

7. Installation according to either of the claims 5 and 6, characterized in that a closure member (140) adapted to be attached to an open bottom end of the hood (32) is located in a recess (60) formed in the base plate (50), the hood being demountably mounted on the rotary platform (48).

8. Installation according to claim 7, characterized in that the closure member (140) is located in the recess (60) in the flap-receiving station.

9. Installation according to any one of the claims 5 to 8, characterized in that the ramps (30, 34) rest on the base plate (50) via swivel links (30b, 34b) and can expand freely downwards.

10. Installation according to any one of the claims 5 to 9, characterized in that the base plate (50) rests via a swivel joint (50a, 96a) on a tube (96) connected to a slab (24) closing the main vessel (10), the tube (96) enclosing the primary ramp (30) and the base plate (50) moreover resting via sliding supports (104) on a floor (22) into which the secondary ramp (34) opens.

11. Installation according to any one of the preceding claims, characterized in that the means for lifting the pot comprise two cables (40) wound at one end on two drums (44) simultaneously actuated by a common motor assembly (121), the opposite end being attached to the transporting pot (28), means (132, 138) being provided to detect any imbalance between the forces exerted on each of the cables.

12. Installation according to any one of the preceding claims, characterized in that the guiding means inside each of the ramps and the pivotable hood are rails (30a, 34a, 32a), the ends of the rails (32a) of the hood and of the rails (30a, 32a) of the ramps being separated by a limited clearance when such rails are aligned.

13. Installation according to any one of the preceding claims, characterized in that each of the flaps (46, 46') is mounted on the rotary platform (48) via a control mechanism (66) enabling the flap to be moved between a top position in which the flap is retracted into a recess (48b) in the rotary platform (48) and a bottom position in which the flap closes the end of one of the ramps (30, 34), the control mechanism (66) also comprising means (76) for gripping the flap (46, 46').

**Patentansprüche**

1. Fördereinrichtung für Anordnungen (16), die den Kern des Kernreaktors mit schnellen Neutronen bilden, zwischen einer ersten Stelle, die in einem Hauptbecken (10), das den Kern enthält, und einer zweiten Stelle, die in einem Nebenbecken (36) angeordnet ist, wobei diese Einrichtung wenigstens eine schwenkbare Transferhaube (32), Einrichtungen (54) zum Schwenken dieser Haube um eine vertikale Achse, zwei geneigte Rampen (30,34), die geeignet sind, die Haube mit der ersten Stelle bzw. der zweiten Stelle zu verbinden, wenigstens einem Transportbehälter (28) einer Anordnung, Hebeeinrichtungen (40,121) des Behälters entlang von inneren Führungseinrichtungen (30a,34a,32a) an jeder der Rampen und an der schwenkbaren Haube, zwischen der ersten Stelle und der zweiten Stelle, und Einrichtungen enthält, um die Rampen an ihren oberen Enden abzudecken, wenn der Reaktor im Betrieb ist, **dadurch gekennzeichnet, daß die** Einrichtungen zum Abdecken der Rampen zwei Klappen (46) aufweisen, die von einer drehenden Plattform (48) getragen werden, die ebenfalls die Transferhaube (32) trägt, wobei die Klappen an Stellen angeordnet sind, derart, daß sie gleichzeitig oberhalb der oberen Enden der Rampen (30,34) mit Hilfe von Einrichtungen (54) zum Schwenken der Haube angeordnet werden können, wenn der Reaktor im Betrieb ist, und daß der Behälter (28) mit den Führungseinrichtungen (30a,34a,32a) auf isostatische Weise zusammenwirkt.

2. Einrichtung nach Anspruch 1, **dadurch gekennzeichnet, daß** die Transferhaube (32) ein dickes Rohr (32b) aufweist, das um einen Winkel geneigt ist, der identisch ist zu jenem der Rampen (30,34), derart, daß es in der Verlängerung einer jeden dieser Rampen, bei der Anbringung der Einrichtungen (54) zum Schwenken der Haube plaziert werden kann.

3. Einrichtung nach Anspruch 2, **dadurch gekennzeichnet, daß** das dicke Rohr (32b) außen durch eine Wärmedämmung (32c) überdeckt ist, die mit dem Rohr einen ringförmigen Zirkulationsraum einer Kühlflüssigkeit begrenzt, wobei durch Fenster, die oben und unten an der Wärmedämmung ausgebildet sind, begrenzte Öffnungen durch Überdeckungseinrichtungen (32d) gesteuert werden.

4. Einrichtung nach Anspruch 3, **dadurch gekennzeichnet, daß** Heizeinrichtungen (33) um das dicke Rohr (32b) in Berührung mit diesem Rohr angeordnet sind.

5. Einrichtung nach einem der Ansprüche 1 bis 4, **dadurch gekennzeichnet, daß** die drehende Plattform (48) ebenfalls eine Austauschklappe (46') trägt, die unter einem entfernbaren Stopfen (62) angeordnet ist, der diese Plattform durchquert, wobei eine Aufnahmestellung der Klapper, gebildet aus einer Ausnehmung (60), gebildet auf einer festen Basisplatte (50), die unterhalb der Plattform angeordnet ist, erlaubt, eine der Überdeckungsklappen der Rampen (46) mit der Austauschklappe (46') auszutauschen.

6. Einrichtung nach Anspruch 5, **dadurch gekennzeichnet, daß** die Austauschklappe (46') und die Haube (32) an zwei Orten angeordnet sind, derart, daß sie gleichzeitig oberhalb der oberen Enden der Rampen (30,34) mit Hilfe von Einrichtungen (54) angeordnet werden können, um die Haube zu schwenken, wenn der Reaktor im Stillstand ist.

7. Einrichtung nach Anspruch 5 oder 6, **dadurch gekennzeichnet, daß** eine Überdeckungseinrichtung (140), die geeignet ist, auf einem unteren offenen Ende der Haube (32) befestigt zu werden, in einer Ausnehmung (60) angeordnet ist, die auf der Basisplatte (50) ausgebildet ist, wobei die Haube auf entfernbare Weise auf der drehenden Plattform (48) angebracht ist.

8. Einrichtung nach Anspruch 7, **dadurch gekennzeichnet, daß** die Verschlußvorrichtung (140) in der Ausnehmung (60) der Aufnahmestellung der Klappen angeordnet ist.

9. Einrichtung nach einem der Ansprüche 5 bis 8, **dadurch gekennzeichnet, daß** die Rampen (30,34) auf der Basisplatte (50) mittels Gelenkverbindungen (30b,34b) ruhen und sich frei nach unten bewegen können.

10. Einrichtung nach einem der Ansprüche 5 bis 9, **dadurch gekennzeichnet, daß** die Basisplatte (50) über eine Gelenkverbindung (50a,96a) auf einem Mantel (96) ruht, der verbunden ist mit einer Platte (24), die das Hauptbecken (10) verschließt, wobei der Mantel (96) die erste Rampe (30) umgibt, wobei die Basisplatte (50) weiterhin auf einem Boden (22) ruht, in den die zweite Rampe (34) durch Gleitlager (104) mündet.

11. Einrichtung nach einem der vorhergehenden Ansprüche, **dadurch gekennzeichnet, daß** die Anhebeeinrichtungen des Behälters zwei Seile (40) aufweisen, die an einem Ende auf zwei Trommeln (44) aufgerollt sind, die gleichzeitig durch eine gemeinsame Motoranordnung (121) betätigt werden und deren gegenüberliegendes Ende an dem Transportbehälter (28) angehängt ist, und Einrichtungen (132,138) vorgesehen sind, um ein evtl. Ungleichgewicht zwischen den auf ein jedes Seil wirkenden Kräften zu erfassen.

12. Einrichtung nach einem der vorhergehenden Ansprüche, **dadurch gekennzeichnet, daß** die inneren Führungseinrichtungen bei jeder der Rampen und der schwenkbaren Haube Schienen (30a,34a,32a) sind, wobei die Enden der Schienen (32a) der Haube und der Schienen (30a,32a) der Rampen durch ein begrenztes Spiel voneinander getrennt sind, wenn diese Schienen ausgerichtet sind.

13. Einrichtung nach einem der vorhergehenden Ansprüche, **dadurch gekennzeichnet,** daß eine jede der Klappen (46,46') auf der drehbaren Plattform (48) mittels eines Betätigungs- bzw. Steuermechanismus (66) angebracht ist, der eine Bewegung der Klappe zwischen einer oberen Stellung, in der diese Klappe in eine Ausnehmung (48b) der drehenden Plattform (48) eingezogen ist, und einer tiefen Stellung erlaubt, in der die Klappe das Ende der einen der Rampen (30,34) verschließt, wobei der Steuerungsmechanismus (66) weiterhin Einrichtungen (76) aufweist, um die Aufnahme der Klappe (46,46') sicherzustellen.

FIG. 1

FIG. 2

EP 0 247 937 B1

FIG. 3a

60    120a
140b    140
    140b
34    30
50

FIG. 3b

32    140
142    142
140b    140b
46    46
46'    48

FIG. 4

142    32
    142
48    140a    140
50    140
60

FIG. 5

FIG. 6

FIG. 7

FIG. 8

FIG 9

FIG 9a